# EUROPEAN PATENT SPECIFICATION

(11) **EP 4 040 003 B1**
(45) Date of publication and mention of the grant of the patent: **27.03.2024**
(21) Application number: 22152148.7
(22) Date of filing: 19.01.2022
(51) Int. Cl.: F16D 55/22, F16D 65/18

(54) **DISC BRAKE**
SCHEIBENBREMSE
FREIN À DISQUE

(30) Priority: 09.02.2021 JP 2021019108
(43) Date of publication of application: 10.08.2022
(73) Proprietor: TOYOTA JIDOSHA KABUSHIKI KAISHA, Toyota-shi, Aichi-ken, 471-8571 (JP)
(72) Inventor: YOKOYAMA, Tomohiro, Toyota-shi, 471-8571 (JP)
(74) Representative: J A Kemp LLP

(56) References cited:
- EP-A1- 0 083 881
- GB-A- 2 176 555
- JP-A- S63 166 642
- JP-A- 2017 020 644

## Description

### BACKGROUND

### Technical Field

The following invention relates to a disc brake mounted on a wheel of a vehicle.

### Description of Related Art

Patent Document 1 (Japanese Patent Application Publication No. 2017-020644) discloses a floating-type disc brake including: (a) an inner pad and an outer pad respectively located on opposite sides of a rotor rotatable with a wheel; (b) a pressing device configured to press the inner pad and the outer pad against the rotor; and (c) a housing mounted on a non-rotating member and holding the pressing device. The pressing device includes: (i) a first pressing member held by the housing and movable toward the rotor and a second pressing member held by the housing and movable away from the rotor; and (ii) a caliper held by the housing so as to be movable relative to the housing in a direction parallel to a rotation axis of the rotor and configured to be moved by a movement of the second pressing member. The caliper is held by the housing through pins that extend in the direction parallel to the rotation axis. A central axis of each pin and central axes of the first pressing member and the second pressing member are not located on the same one plane. JP S63166642 A discloses a brake control device.

### SUMMARY

An aspect of the present invention is directed to an improvement of a disc brake including a first pressing member and a second pressing member, and more particularly, to a technique of ensuring a smooth movement of a driving member that is moved by a movement of the second pressing member, for instance.

In the disc brake according to the present invention, the housing includes: a first housing portion disposed on an inner side of the rotor; and a second housing portion that extends from the first housing portion to an outer side of the rotor. The second housing portion includes a pair of rods spaced apart from each other in a circumferential direction of a wheel and extending in an axial direction. The outer pad is held by a pair of rail portions of the pair of rods so as to be movable in the axial direction relative to the pair of rail portions. The pair of rail portions respectively have torque receivers configured to receive a torque that acts on the outer pad when the disc brake operates. In the present disc brake, the torque receivers are provided not for the driving member but for the second housing portion. This configuration reduces a force in the circumferential direction that acts on the driving member, thus ensuring a smooth axial movement of the driving member.

### BRIEF DESCRIPTION OF THE DRAWINGS

The objects, features, advantages, and technical and industrial significance of the present invention will be better understood by reading the following detailed description of an embodiment, when considered in connection with the accompanying drawings, in which:
Fig. 1 is a perspective view of a disc brake according to one embodiment of the present invention;
Fig. 2 is a side view of the disc brake;
Fig. 3 is a rear view of the disc brake;
Fig. 4 is a cross-sectional view of the disc brake taken along line IV-IV in Fig. 6;
Fig. 5 is a cross-sectional view of the disc brake;
Fig. 6 is a view of the disc brake, illustrating components around an inner pad;
Fig. 7 is a cross-sectional view of the disc brake taken along line VII-VII in Fig. 6; and
Fig. 8 is a cross-sectional view of the disc brake taken along line VIII-VIII in Fig. 4.

### DETAILED DESCRIPTION OF EMBODIMENT

Referring to the drawings, there will be hereinafter described a disc brake provided for a wheel of a vehicle according to one embodiment of the present invention, The disc brake may be operated by a hydraulic pressure or may be operated by an electromagnetic drive force.

The disc brake according to the present invention is a floating disc brake operated by a hydraulic pressure.

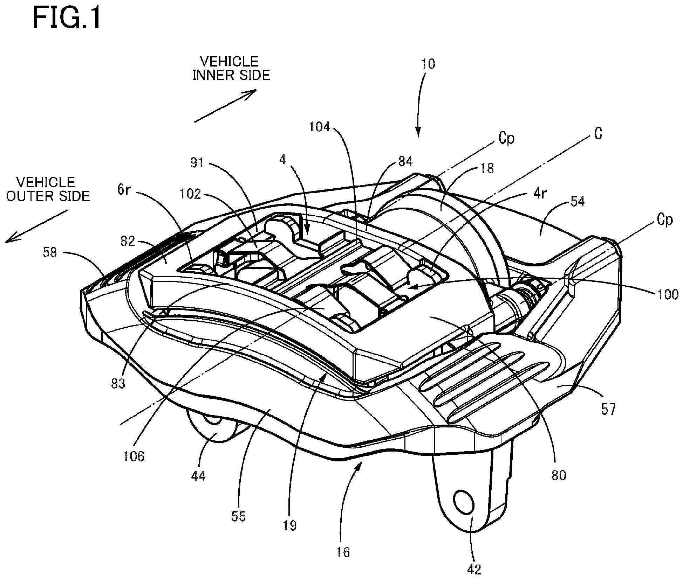

As illustrated in Figs. 1-5, the disc brake includes: a rotor 3 that is rotated together with a wheel; an inner pad 4 and an outer pad 6 respectively located on opposite sides of the rotor 3; a pressing device 8; and a housing 10 holding the pressing device 8. The pressing device 8 includes a wheel cylinder 14 and a frame 16 as one example of a driving member. In the following description, a direction parallel to a rotation axis L of the rotor 3 will be simply referred to as "axial direction" where appropriate. A side on which the outer pad 6 is located in the axial direction is an outer side in the vehicle, and a side on which the inner pad 4 is located in the axial direction is an inner side in the vehicle.

The inner pad 4 includes a back board 4r and a pad portion 4p (as one example of a frictionally engageable portion) held on the back board 4r. The outer pad 6 includes a back board 6r and a pad portion 6p (as another example of the frictionally engageable portion) held on the back board 6r. The pad portion 4p of the inner pad 4 and the pad portion 6p of the outer pad 6 face the rotor 3.

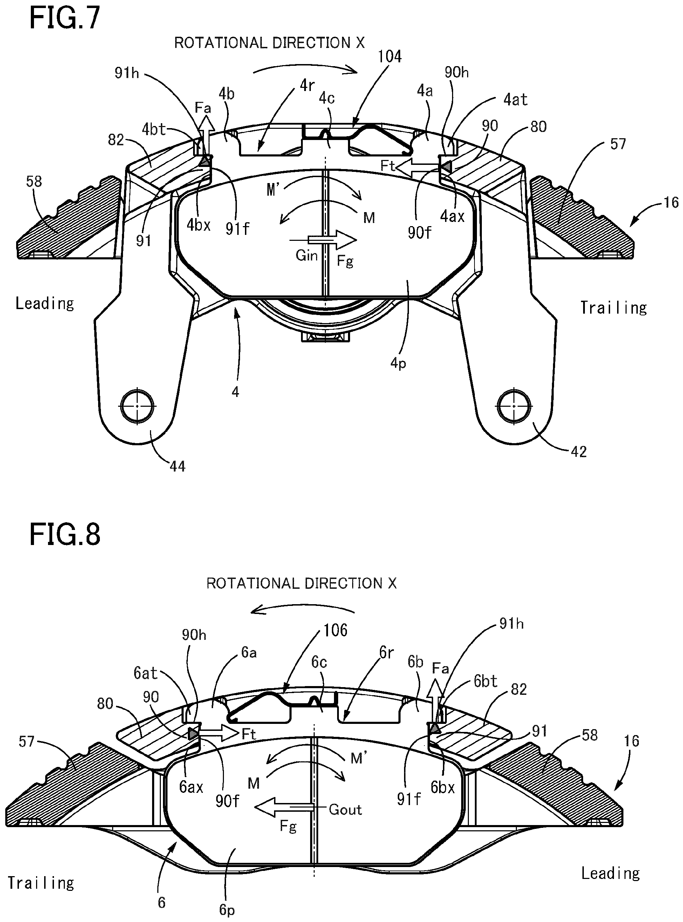

As illustrated in Figs. 7 and 8, the back board 4r includes protrusions 4a, 4b provided on an outer circumferential portion of the back board 4r at positions spaced apart from each other in a circumferential direction of the wheel. The protrusions 4a, 4b protrude outward in a radial direction of the wheel. Likewise, the back board 6r includes protrusions 6a, 6b provided on an outer circumferential portion of the back board 6r at positions spaced apart from each other in the circumferential direction. The protrusions 6a, 6b protrude outward in the radial direction. The protrusions 4a, 4b, 6a, 6b respectively include hook portions 4at, 4bt, 6at, 6bt that protrude outward in the circumferential direction. In other words, recesses 4ax, 4bx, 6ax, 6bx that are recessed in the circumferential direction are respectively formed at circumferentially outer and radially inner portions of the corresponding protrusions 4a, 4b, 6a, 6b, and portions of the respective protrusions 4a, 4b, 6a, 6b that are located radially outward of the corresponding recesses 4ax, 4bx, 6ax, 6bx serve as the hook portion 4at, 4bt, 6at, 6bt described above. The back board 4r further includes a protrusion 4c provided at an intermediate position of the outer circumferential portion of the back board 4r. Likewise, the back board 6r further includes a protrusion 6c provided at an intermediate position of the outer circumferential portion of the back board 6r. The top portion of each protrusion 4c, 6c is substantially flat.

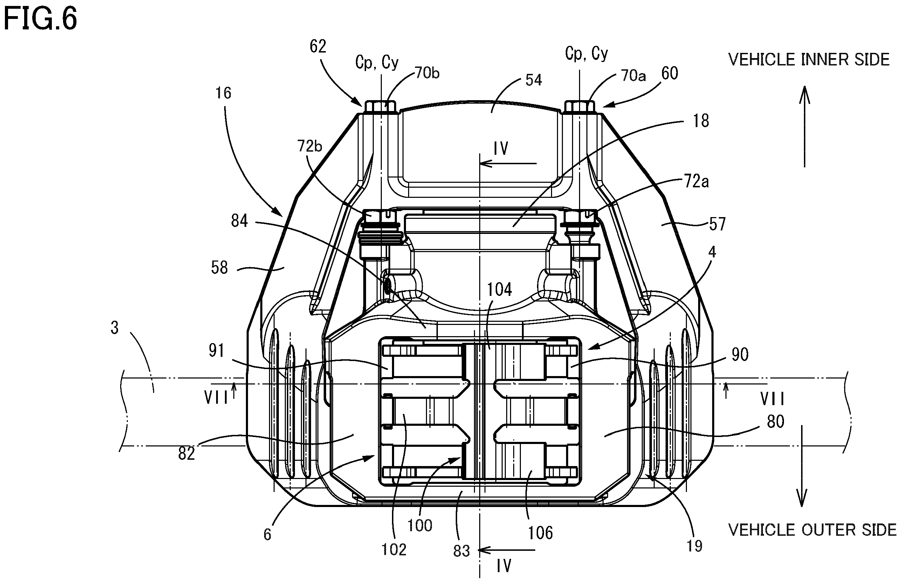

As illustrated in Figs. 1 and 6, the housing 10 includes: a first housing portion 18 located on an inner side of the rotor 3 in a width direction of the vehicle; and a second housing portion 19 fixed to the first housing portion 18 and extending from the inner side of the rotor 3 toward an outside of the vehicle over the rotor 3.

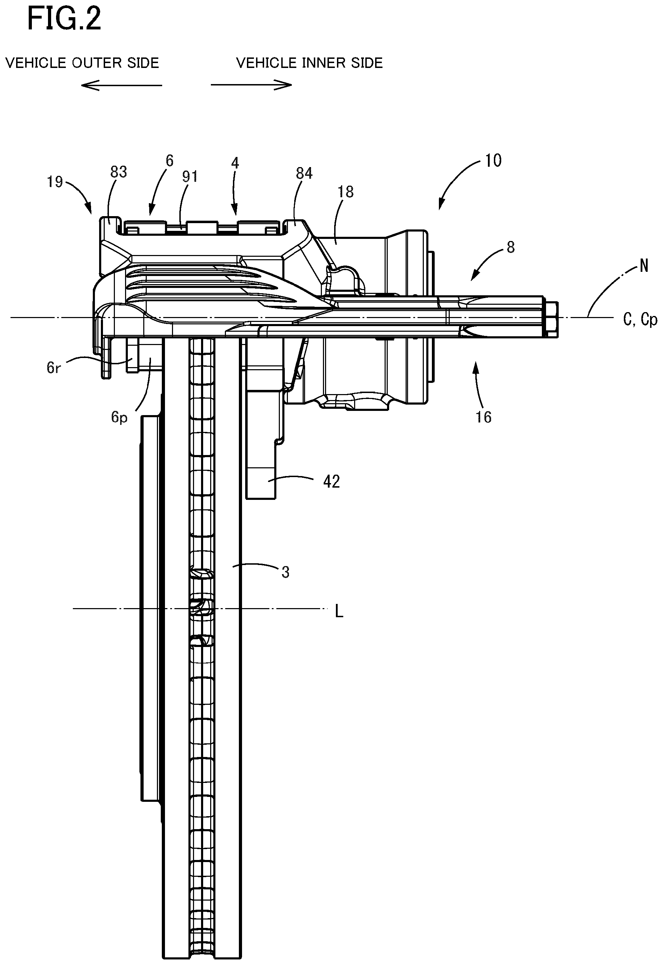

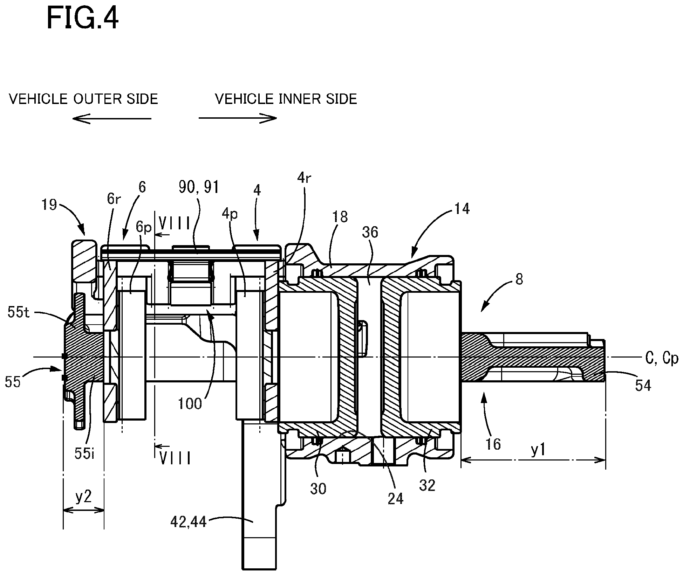

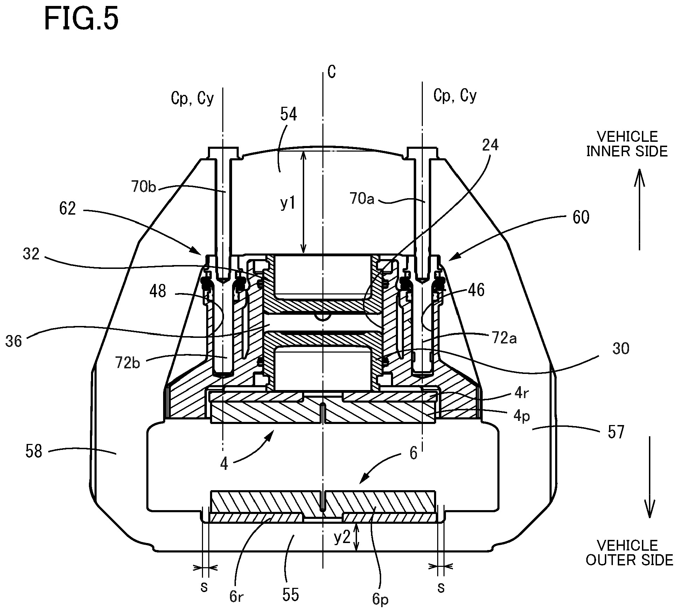

The first housing portion 18 extends generally in the axial direction. As illustrated in Figs. 4 and 5, a cylinder bore 24 is formed in the first housing portion 18 so as to extend therethrough in the axial direction. As illustrated in Fig. 2, a central axis C of the cylinder bore 24 is parallel to the rotation axis L of the rotor 3. A first piston 30 as one example of a first pressing member and a second piston 32 as one example of a second pressing member are fluid-tightly and slidably disposed in the cylinder bore 24 via piston seals. A portion of the cylinder bore 24 between the first piston 30 and the second piston 32 serves as a hydraulic-pressure chamber 36. The first piston 30 and the second piston 32 are movable relative to each other in the axial direction.

In the present invention, a portion of the first housing portion 18 in which the cylinder bore 24 is formed serves as a cylinder body. The wheel cylinder 14 is constituted by the cylinder body, the first piston 30, the second piston 32, etc. It is noted that a central axis of the first piston 30 and a central axis of the second piston 32 substantially coincide with the central axis C of the cylinder bore 24.

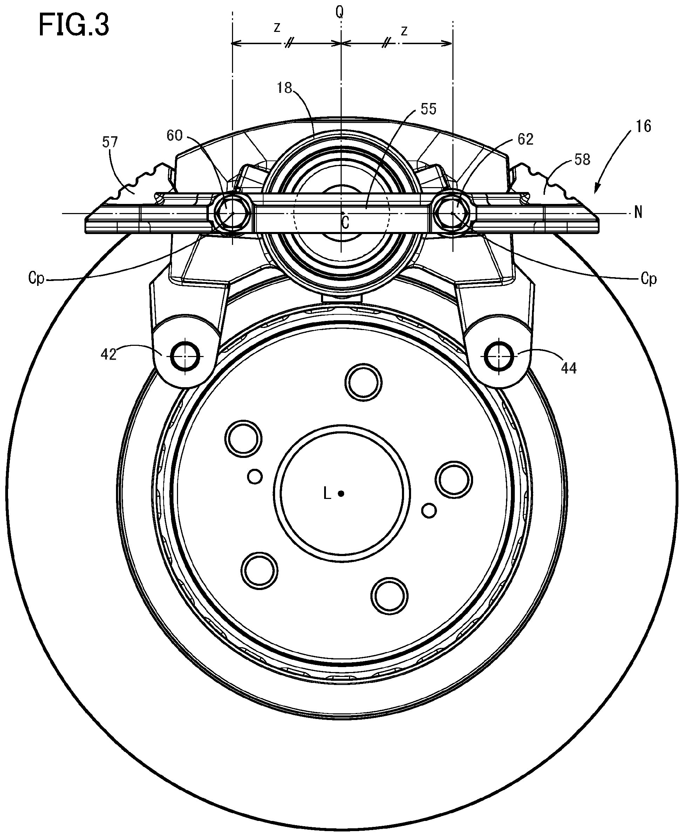

As illustrated in Figs. 1 and 3, a pair of mount portions 42, 44 are provided on opposite sides, in the circumferential direction, of a rotor-side end portion of the first housing portion 18 in the axial direction. The housing 10 is secured at the mount portions 42, 44 to a suspension member (which may also be referred to as "vehicle-body-side member") such as a knuckle as one example of a non-rotating member.

As illustrated in Fig. 5, a pair of pin holding holes 46, 48 are respectively formed on opposite sides, in the circumferential direction, of the cylinder bore 24 of the first housing portion 18. The pin holding holes 46, 48 extend in a direction parallel to the axial direction. A central axis Cp of each of the pin holding holes 46, 48 and the central axis C of the cylinder bore 24 are parallel to each other and are located on substantially the same plane N, as illustrated in Fig. 3. In side view of the present disc brake, the central axis C of the cylinder bore 24 and the central axis Cp of each of the pin holding holes 46, 48 are located at substantially the same position, as illustrated in Figs. 2 and 4.

As illustrated in Figs. 1, 5, and 6, the frame 16 is a rigid member generally shaped like a frame and is held by the first housing portion 18 so as to be movable in the axial direction relative to the first housing portion 18.

The frame 16 includes: (i) a first side portion 54 and a second side portion 55 spaced apart from each other in the axial direction; and (ii) a third side portion 57 and a fourth side portion 58 coupling the first side portion 54 and the second side portion 55 to each other and spaced apart from each other in the circumferential direction. In the present embodiment, the first side portion 54 and the second side portion 55 extend generally in a direction orthogonal to the axial direction, and the third side portion 57 and the fourth side portion 58 extend in a direction that intersects the first side portion 54 and the second side portion 55.

The first side portion 54 and the second side portion 55 are respectively located on opposite sides of the rotor 3 in the axial direction. The first side portion 54 is located on an inner side of the rotor 3 in the width direction of the vehicle and opposed to the second piston 32. The second side portion 55 is located on an outer side of the rotor 3 in the width direction of the vehicle and is engaged with the outer pad 6. In the present embodiment, the outer pad 6 is engaged with the second side portion 55 so as to be movable in the axial direction together with the second side portion 55. It is noted that the outer pad 6 is engaged with the second side portion 55 with clearances interposed therebetween in the circumferential direction.

The third side portion 57 and the fourth side portion 58 extend on the inner and outer sides of the rotor 3 in the width direction of the vehicle. As illustrated in Figs. 5, 7, and 8, third side portion 57 and the fourth side portion 58 extend over the rotor 3 without extending over outer circumferential surfaces of the inner pad 4 and the outer pad 6 in the radial direction.

As illustrated in Figs. 1, 3, 5, 6, and 7, for instance, the frame 16 is shaped to be symmetric with respect to a symmetry plane Q that extends in the axial direction, and the plane N indicated above is substantially orthogonal to the symmetry plane Q.

The symmetry plane Q of the frame 16 does not necessarily pass the central axis C of the cylinder bore 24. The symmetry plane Q may be configured to pass the central axis C and may be configured not to pass the central axis C. It may be considered that the plane N is substantially orthogonal to a plane that includes the central axis C of the cylinder bore 24 (which is identical to the central axis of the first piston 30 and the central axis of the second piston 32) and the rotation axis L.

As illustrated in Figs. 3 and 5, a pair of pins 60, 62 extending in the axial direction and protruding toward the rotor 3 are mounted to the first side portion 54 of the frame 16 at positions that are symmetric with respect to the symmetry plane Q, namely, at positions that are respectively distant from the symmetry plane Q by an equivalent distance (z=z). The pins 60, 62 are opposed to the respective pin holding holes 46, 48 formed in the first housing portion 18 such that the pins 60, 62 are movable relative to the pin holding holes 46, 48. In other words, the frame 16 is held by the housing 10 in such a posture that the central axis Cy of each of the pins 60, 62 substantially coincide with the central axis Cp of each of the pin holding holes 46, 48. The frame 16 is held by the housing 10 through the pins 60, 62 so as to be movable in the axial direction relative to the housing 10.

In a state in which the frame 16 is mounted on the housing 10, the central axis C of the cylinder bore 24 (which is also the central axes of the first piston 30 and the second piston 32) and the central axis Cy of each of the pins 60, 62 are located on substantially the same plane N. In the specification, "to be located on the same plane N" means "to be located on substantially the same plane N". This applies to "to be located at the same position" and "orthogonal". That is, "to be located at the same position" means "to be located at substantially the same position" and "to be orthogonal" means "to be substantially orthogonal".

The pin 60 includes a first pin portion 70a and a second pin portion 72a, and the pin 62 includes a first pin portion 70b and a second pin portion 72b. The first pin portions 70a, 70b are located at the frame 16. The second pin portions 72a, 72b are connected to respective portions of the corresponding first pin portions 70a, 70b that protrude from the frame 16. The first pin portions 70a, 70b and the second pin portions 72a, 72b are movable together with the frame 16 in the axial direction.

In plan view, an average length y1 of the first side portion 54 in the axial direction is greater than an average length y2 of the second side portion 55 in the axial direction (y1>y2), as illustrated in Figs. 5 and 6. In a case where the frame 16 is designed such that the rigidity required with respect to a force in the axial direction is obtained mainly by the first side portion 54, the length y2 of the second side portion 55 in the axial direction can be reduced. The outer side in the vehicle, namely, the side in the vehicle on which the second side portion 55 is located, has more restrictions on space. Thus, a reduction in the length y2 of the second side portion 55 in the axial direction is effective particularly when the disc brake is mounted on a wheel equipped with an in-wheel motor.

The length y1 of the first side portion 54 is preferably made large for enabling the frame 16 to be held by the housing 10 through the pins 60, 62.

For instance, the length y2 of the second side portion 55 may be less than 2/3 of the length y1 of the first side portion 54 (y2<2*y1/3). The length y2 of the second side portion 55 may be less than 1/2 of the length y1 of the first side portion 54 (y2<y1/2), may be less than 1/3 of the length y1 (y2<y1/3), may be less than 1/4 of the length y1 (y2<y1/4), or may be less than 1/5 of the length y1 (y2<y1/5), for instance.

As illustrated in Fig. 4, the second side portion 55 has a cross section shaped such that an outer portion 55t has a large length in the radial direction and an inner portion 55i has a small length in the radial direction. This configuration allows a higher degree of flexural rigidity with respect to the force in the axial direction that acts on the second side portion 55 when the disc brake operates, as compared with a second side portion having a generally rectangular cross-sectional shape and having the same cross-sectional area as the second side portion 55. In other words, the cross section of the second side portion 55 is shaped to allow a higher degree of flexural rigidity, thus making it possible to reduce the axial length y2 of the second side portion 55. Further, the outer portion 55t has the length in the radial direction greater than the length in the radial direction of the inner portion 55i, making it possible to enhance design of the disc brake. For instance, a logo can be put on an outer surface of the outer portion 55t.

The frame 16 is held at the first side portion 54 by the housing 10 through the pair of pins 60, 61, thus allowing easy work of the frame 16, as compared with a case in which the frame 16 is held at the third side portion 57 and the fourth side portion 58 by the housing 10.

As illustrated in Figs. 1 and 6, for instance, the second housing portion 19 is generally shaped like a frame in plan view and includes: a pair of rods 80, 82 spaced apart from each other in the circumferential direction and extending in the axial direction; and couplers 83, 84 coupling the rods 80, 82 and extending generally in the circumferential direction. As illustrated in Figs. 7 and 8, the inner pad 4 and the outer pad 6 are held by the rods 80, 82 so as to be movable in the axial direction.

In the present invention, the rods 80, 82 respectively include a pair of protruding rail portions 90, 91 that protrude toward each other and extend in the axial direction. The outer pad 6 and the inner pad 4 are held at hook portions 4at, 4bt, 6at, 6bt by the pair of protruding rail portions 90, 91 (hereinafter simply referred to as "rail portions 90, 91" where appropriate). The rail portions 90, 91 are respectively provided at facing portions of the corresponding rods 80, 82 that face each other in the circumferential direction. Specifically, a cutout extending in the axial direction is formed at a radially outer portion of the facing portion of each rod 80, 82, and each rail portion 90, 91 is formed at a portion of the facing portion of each rod 80, 82 that is located radially inward of the cutout.

In a state in which the inner pad 4 and the outer pad 6 are held at the hook portions 4at, 4bt, 6at, 6bt by the rail portions 90, 91, a slight clearance is left between a bottom surface of each recess 4ax, 6ax and a facing surface 90f of the rail portion 90, and a slight clearance is left: between a bottom surface of each recess 4bx, 6bx and a facing surface 91f of the rail portion 91. The facing surfaces 90f, 91f of the respective rail portions 90, 91 function as torque receivers.

In the present invention, a leaf spring 100 as one example of an elastic member is provided to hold the inner pad 4 and the outer pad 6 at their radially outer portions such that the leaf spring 100 elastically pushes the pads 4, 6 in the radial direction and the circumferential direction. As illustrated in Figs. 1 and 6, the leaf spring 100 is for reducing vibrations of the outer pad 6 and the inner pad 4 in the radial direction and the circumferential direction. The leaf spring 100 includes an intermediate portion 102 located intermediate in the axial direction, an inner-pad holder portion 104 located on the inner side of the intermediate portion 102 in the width direction of the vehicle, and an outer-pad holder portion 106 located on the outer side of the intermediate portion 102 in the width direction of the vehicle. The intermediate portion 102, the inner-pad holder portion 104, and the outer-pad holder portion 106 are connected to one another. The leaf spring 100 is held at the intermediate portion 102 by the rail portions 90, 91. In the present embodiment, the inner pad 4 and the outer pad 6 are held by the single leaf spring 100, resulting in a decrease in the number of components, as compared with an arrangement in which two leaf springs are used.

As illustrated in Figs. 1, 4, 7, and 8, the inner-pad holder portion 104 is elastically engaged with the protrusion 4a of the back board 4r of the inner pad 4 in the circumferential direction (Trailing direction) and is elastically engaged with the protrusion 4c from the outer side in the radial direction, thus resulting in a reduction of the vibrations of the inner pad 4 in the circumferential direction and the radial direction. Likewise, the outer-pad holder portion 106 is elastically engaged with the protrusion 6a of the back board 6r of the outer pad 6 in the circumferential direction (Trailing direction) and is elastically engaged with the protrusion 6c in the radial direction.

As described above, the leaf spring 100 holds the inner pad 4 and the outer pad 6 so as to elastically push the pads 4, 6 in the circumferential direction and the radial direction. Thus, the leaf spring 100 can appropriately hold the inner pad 4 and the outer pad 6 irrespective of at which position of the wheel the disc brake is mounted.

The leaf spring 100 holds the inner pad 4 and the outer pad 6 in a state in which an elastic force is applied to the pads 4, 6 in the circumferential direction (Trailing direction). Thus, even if a pressing force (i.e., the hydraulic pressure in the present embodiment), by which the inner pad 4 and the outer pad 6 are pressed against the rotor 3 in the operation of the disc brake, is small, the vibrations of the inner pad 4 and the outer pad 6 in the circumferential direction can be well reduced or prevented.

The inner pad 4 is mounted to the second housing portion 19 in the following manner. The inner pad 4 taking an inclined posture is inserted between the rods 80, 82 from one side of the second housing portion 19 on which the center axis of the wheel is located while the protrusions 4a, 4b of the back board 4r are elastically deformed. The radially inner surfaces of the hook portions 4at, 4bt of the protrusions 4a, 4b respectively come into contact with radially outer surfaces 90h, 91h of the rail portions 90, 91. In this way, the inner pad 4 is held at the hook portions 4at, 4bt thereof by the rail portions 90, 91 so as to be movable in the axial direction. The same applies to the outer pad 6.

As described above, the inner pad 4 and the outer pad 6 are held by the rods 80, 81 utilizing the rail portions 90, 91, thus enhancing mountability and workability. In other words, the configuration according to the present embodiment enables the inner pad 4 and the outer pad 6 to be easily held by the rods 80, 81, as compared with a configuration in which recesses are formed in the rods 80, 81 so as to correspond to the protrusions 4a, 4b, 6a, 6b formed at the respective outer circumferential portions of the inner pad 4 and the outer pad 6 and the inner pad 4 and the outer pad 6 are held such that the protrusions 4a, 4b, 6a, 6b are engaged in the respective recesses.

In the present invention, it is simply required that the hook portions 4at, 4bt of the inner pad 4 and the hook portions 6at, 6bt of the outer pad 6 are engaged with the rail portions 90, 91, thus not requiring a high dimensional accuracy of the rail portions 90, 91 and the hook portions 4at, 4bt, 6at, 6bt. This leads to a reduction in production cost.

The disc brake constructed as described above is operated by the hydraulic pressure in the hydraulic-pressure chamber 36 of the wheel cylinder 14. A force that corresponds to the hydraulic pressure in the hydraulic-pressure chamber 36 is applied to the first piston 30 and the second piston 32. The first piston 30 is moved toward the rotor 3 in the axial direction to press the inner pad 4 against the rotor 3. The second piston 32 is moved away from the rotor 3 in the axial direction to move the frame 16 in the axial direction. The movement of the frame 16 causes the outer pad 6 to be pressed against the rotor 3. The rotor 3 is pressed from its opposite sides by the inner pad 4 and the outer pad 6, so that the rotor 3 and the inner and outer pads 4, 6 are brought into frictional engagement with each other. Thus, the disc brake is operated to reduce rotation of the rotor 3, thereby reducing rotation of the wheel.

In a case where the disc brake is operated when the wheel is rotating in a direction indicated by an arrow X in Figs. 7 and 8 (hereinafter referred to as "rotational direction X" where appropriate), a torque in the rotational direction X acts on the inner pad 4 and the outer pad 6, and a force Fg in the circumferential direction acts on the center of gravity Gin of the inner pad 4 and the center of gravity Gout of the outer pad 6.

As illustrated in Fig. 7, the inner pad 4 is moved in the X direction, and the bottom surface of the recess 4ax of the back board 4r comes into contact with the facing surface 90f of the rail portion 90 of the rod 80 of the second housing portion 19. The torque that acts on the inner pad 4 is received by the facing surface 90f of the rail portion 90 of the rod 80. Thus, the facing surface 90f serves as the torque receiver.

A reaction force Ft at the facing surface (torque receiver) 90f generates a moment M that acts on the inner pad 4. Further, rotation of the inner pad 4 by the moment M is received by the radially outer surface 91h of the rail portion 91. A reaction force Fa at the radially outer surface 91h generates a moment M' that acts on the inner pad 4. The moment M' is opposite in direction to the moment M. The moment M and the moment M' reduce or prevent a change in the posture of the inner pad 4, so that the posture of the inner pad 4 is stabilized.

The same applies to the outer pad 6. As illustrated in Fig. 8, the outer pad 6 is moved in the X direction, and the bottom surface of the recess 6ax of the back board 6r comes into contact with the facing surface 90f of the rail portion 90. The torque that acts on the outer pad 6 is received by the facing surface 90f (torque receiver).

A reaction force Ft at the facing surface 90f (torque receiver) generates a moment M that acts on the outer pad 6. Further, rotation of the outer pad 6 by the moment M is received by the radially outer surface 91h of the rail portion 91. A reaction force Fa at the radially outer surface 90h generates a moment M'. The moment M and the moment M' reduce or prevent a change in the posture of the outer pad 6.

In a case where the wheel is rotated in a direction opposite to the X direction described above, the facing surface 91f of the rail portion 91 serves as the torque receiver, and the moment M is received by the radially outer surface 90h of the rail portion 90.

The torque that acts on the inner pad 4 and the outer pad 6 is received not by the frame 16 but by the housing 10. It is thus possible to reduce or prevent the force in the circumferential direction that acts on the frame 16, so that the frame 16 can be smoothly moved in the axial direction. It is further possible to reduce or prevent the force that acts on the third side portion 57 and the fourth side portion 58. This achieves a reduction in weight of the third side portion 57 and the fourth side portion 58 and accordingly achieves a reduction in weight and cost of the frame 16 and the disc brake.

The frame 16 is held by the housing 10 through the pins 60, 62 so as to be movable relative to the housing 10 in the axial direction. The central axis Cp of each of the pins 60, 62 and the central axis C of each of the first piston 30 and the second piston 32 are located on substantially the same plane and are located at substantially the same position in side view of the disc brake. This configuration enables the frame 16 to be more smoothly moved in the axial direction.

It is to be understood that the present invention is not limited to the details of the illustrated embodiment but may be embodied with various changes and modifications, which may occur to those skilled in the art, without departing from the scope of the invention within the scope of the appended claims. For instance, the disc brake is not limited to the hydraulic brake but may be an electric brake operable by driving of an electric motor.

## Claims

1. A disc brake of a floating type, comprising:
an inner pad (4) and an outer pad (6) respectively located on opposite sides of a rotor (3) rotatable with a wheel of a vehicle;
a pressing device (8) configured to press the inner pad (4) and the outer pad (6) against the rotor (3); and
a housing (10) mounted on a non-rotating member and holding the pressing device (8),
wherein the pressing device (8) includes:
one or more first pressing members (30) held by the housing (10) and movable toward the rotor (3) and one or more second pressing members (32) held by the housing (10) and movable away from the rotor (3); and
a driving member (16) held by the housing (10) so as to be movable relative to the housing (10) in an axial direction parallel to a rotation axis of the rotor (3), the driving member (16) being configured to be moved by a movement of the one or more second pressing members (32) to press the outer pad (6) against the rotor (3),
wherein the housing (10) includes: a first housing portion (18) disposed on an inner side of the rotor (3) in a width direction of the vehicle and holding the one or more first pressing members (30) and the one or more second pressing members (32); and a second housing portion (19) extending from the first housing portion (18) to an outer side of the rotor (3) in the width direction of the vehicle,
wherein the second housing portion (19) includes a pair of rods (80, 82) spaced apart from each other in a circumferential direction of the wheel and extending in the axial direction, the pair of rods (80, 82) respectively including facing portions that face each other in the circumferential direction, each of the pair of rods (80, 82) including a rail portion (90, 91) provided at the facing portion so as to extend in the axial direction, the rail portions (90, 91) of the pair of rods (80, 82) constituting a pair of rail portions (90, 91), and
wherein the outer pad (6) is held by the pair of rail portions (90, 91) so as to be movable in the axial direction relative to the pair of rail portions (90, 91), and the pair of rail portions (90, 91) respectively have torque receivers (90f, 91f) configured to receive a torque that acts on the outer pad (6).

2. The disc brake according to claim 1,
wherein the outer pad (6) includes a pair of protrusions (6a, 6b) provided on an outer circumferential portion of the outer pad (6) at positions spaced apart from each other in the circumferential direction, so as to protrude outward in a radial direction of the wheel, and
wherein the pair of protrusions (6a, 6b) are engaged respectively with the pair of rail portions (90, 91) to allow the outer pad (6) to be held by the pair of rail portions (90, 91).

3. The disc brake according to claim 1 or 2,
wherein the inner pad (4) is held by the pair of rail portions (90, 91) so as to be movable in the axial direction relative to the pair of rail portions (90, 91),
wherein the disc brake includes an elastic member (100) configured to elastically push the inner pad (4) and the outer pad (6) in a radial direction of the wheel and the circumferential direction, and
wherein the elastic member (100) is held at the pair of rail portions (90, 91).

4. The disc brake according to any one of claims 1 through 3,
wherein the driving member (16) includes a plurality of pins (60, 62) extending in the axial direction and spaced apart from each other in the circumferential direction, the driving member (16) being held by the housing (10) through the plurality of pins (60, 62) so as to be movable in the axial direction relative to the housing (10), and
wherein a central axis of each of the plurality of pins (60, 62), a central axis of each of the one or more first pressing members (30), and a central axis of each of the one or more second pressing members (32) are located on one plane.

5. The disc brake according to claim 4,
wherein the driving member (16) is shaped to be symmetric with respect to a symmetry plane that extends in a direction parallel to the axial direction, and
wherein the one plane extends so as to be orthogonal to the symmetry plane of the driving member (16).

6. The disc brake according to claim 5,
wherein a pair of pins (60, 62) as the plurality of pins (60, 62) are provided at positions of the driving member (16) that are symmetric with respect to the symmetry plane, and
wherein a pair of pin holding holes (46, 48) are formed at portions of the housing (10) that are spaced apart from each other in the circumferential direction, the pair of pin holding holes (46, 48) extending in the axial direction so as to be parallel to each other.

7. The disc brake according to any one of claims 1 through 6,
wherein the driving member (16) includes a first side portion (54) facing the one or more second pressing members (32) and a second side portion (55) facing the outer pad (6), and
wherein the second side portion (55) has a length in the axial direction less than a length in the axial direction of the first side portion (54).

8. The disc brake according to claim 7, wherein the length in the axial direction of the second side portion (55) is less than 1/3 of the length in the axial direction of the first side portion (54).

9. The disc brake according to claim 7 or 8, wherein the second side portion (55) has a cross section shaped such that an outer portion of the second side portion (55) in the width direction of the vehicle is greater in a radial direction of the wheel than a portion of the second side portion (55) facing the outer pad (6).

## Patentansprüche

1. Schwimmende Scheibenbremse, umfassend:
einen inneren Bremsbelag (4) und einen äußeren Bremsbelag (6), die sich jeweils auf gegenüberliegenden Seiten eines Rotors (3) befinden, der mit einem Rad eines Fahrzeugs drehbar ist;
eine Pressvorrichtung (8), die konfiguriert ist, um den inneren Bremsbelag (4) und den äußeren Bremsbelag (6) gegen den Rotor (3) zu pressen; und
ein Gehäuse (10), das an ein nicht rotierendes Element montiert ist und die Pressvorrichtung (8) hält,
wobei die Pressvorrichtung (8) Folgendes beinhaltet:
ein oder mehrere erste Presselemente (30), die durch das Gehäuse (10) gehalten werden und zu dem Rotor (3) bewegt werden können, und ein oder mehrere zweite Presselemente (32), die durch das Gehäuse (10) gehalten werden und weg von dem Rotor (3) bewegt werden können; und
ein Antriebselement (16), das durch das Gehäuse (10) gehalten wird, sodass es relativ zum Gehäuse (10) in eine axiale Richtung parallel zu einer Drehachse des Rotors (3) bewegt werden kann, wobei das Antriebselement (16) konfiguriert ist, um durch eine Bewegung des einen oder der mehreren zweiten Presselemente (32) bewegt zu werden, um den äußeren Bremsbelag (6) gegen den Rotor (3) zu pressen,
wobei das Gehäuse (10) Folgendes beinhaltet: einen ersten Gehäuseabschnitt (18), der an einer Innenseite des Rotors (3) in einer Breitenrichtung des Fahrzeugs angeordnet ist und das eine oder die mehreren ersten Presselemente (30) und das eine oder die mehreren zweiten Presselemente (32) hält; und einen zweiten Gehäuseabschnitt (19), der sich von dem ersten Gehäuseabschnitt (18) zu einer Außenseite des Rotors (3) in der Breitenrichtung des Fahrzeugs erstreckt,
wobei der zweite Gehäuseabschnitt (19) ein Paar Stangen (80, 82) beinhaltet, das in einer Umfangsrichtung des Rads voneinander beabstandet ist und sich in die axiale Richtung erstreckt, wobei das Paar Stangen (80, 82) jeweils zugewandte Abschnitte beinhaltet, die einander in der Umfangsrichtung zugewandt sind, wobei jedes des Paars Stangen (80, 82) einen Schienenabschnitt (90, 91) beinhaltet, der an dem zugewandten Abschnitt bereitgestellt ist, um sich in die axiale Richtung zu erstrecken, wobei die Schienenabschnitte (90, 91) des Paars Stangen (80, 82) ein Paar Schienenabschnitte (90, 91) bilden, und
wobei der äußere Bremsbelag (6) durch das Paar Schienenabschnitte (90, 91) gehalten wird, um in die axiale Richtung relativ zu dem Paar Schienenabschnitte (90, 91) beweglich zu sein, und das Paar Schienenabschnitte (90, 91) jeweils Drehmomentaufnehmer (90f, 91f) aufweist, die konfiguriert sind, um ein Drehmoment aufzunehmen, das auf den äußeren Bremsbelag (6) wirkt.

2. Scheibenbremse nach Anspruch 1,
wobei der äußere Bremsbelag (6) ein Paar Vorsprünge (6a, 6b) beinhaltet, das an einem Außenumfangsabschnitt des äußeren Bremsbelags (6) an Positionen bereitgestellt ist, die voneinander in der Umfangsrichtung beabstandet sind, um nach außen in eine radiale Richtung des Rads vorzustehen, und
wobei das Paar Vorsprünge (6a, 6b) jeweils mit dem Paar Schienenabschnitte (90, 91) in Eingriff ist, um zuzulassen, dass der äußere Bremsbelag (6) durch das Paar Schienenabschnitte (90, 91) gehalten wird.

3. Scheibenbremse nach Anspruch 1 oder 2,
wobei der innere Bremsbelag (4) durch das Paar Schienenabschnitte (90, 91) gehalten wird, um in der axialen Richtung relativ zu dem Paar Schienenabschnitte (90, 91) beweglich zu sein,
wobei die Scheibenbremse ein elastisches Element (100) beinhaltet, das konfiguriert ist, um den inneren Bremsbelag (4) und den äußeren Bremsbelag (6) in eine radiale Richtung des Rads und die Umfangsrichtung elastisch zu drücken, und
wobei das elastische Element (100) an dem Paar Schienenabschnitte (90, 91) gehalten wird.

4. Scheibenbremse nach einem der Ansprüche 1 bis 3,
wobei das Antriebselement (16) eine Vielzahl von Stiften (60, 62) beinhaltet, die sich in die axiale Richtung erstrecken und beabstandet voneinander in der Umfangsrichtung sind, wobei das Antriebselement (16) durch das Gehäuse (10) durch die Vielzahl von Stiften (60, 62) gehalten wird, um in der axialen Richtung relativ zum Gehäuse (10) beweglich zu sein, und
wobei sich eine Mittelachse von jedem der Vielzahl von Stiften (60, 62), eine Mittelachse von jedem des einen oder der mehreren ersten Presselemente (30) und eine Mittelachse von jedem des einen oder der mehreren zweiten Presselemente (32) auf einer Ebene befinden.

5. Scheibenbremse nach Anspruch 4,
wobei das Antriebselement (16) eine Form aufweist, um in Bezug auf eine Symmetrieebene symmetrisch zu sein, die sich in eine Richtung parallel zu der axialen Richtung erstreckt, und
wobei sich die eine Ebene erstreckt, um orthogonal zur Symmetrieebene des Antriebselements (16) zu sein.

6. Scheibenbremse nach Anspruch 5,
wobei ein Paar Stifte (60, 62) als die Vielzahl von Stiften (60, 62) an Positionen des Antriebselements (16) bereitgestellt ist, die in Bezug auf die Symmetrieebene symmetrisch sind, und
wobei ein Paar Stifthaltelöcher (46, 48) an Abschnitten des Gehäuses (10) gebildet ist, die voneinander in der Umfangsrichtung beabstandet sind, wobei sich das Paar Stifthaltelöcher (46, 48) in die axiale Richtung erstreckt, um parallel zueinander zu sein.

7. Scheibenbremse nach einem der Ansprüche 1 bis 6,
wobei das Antriebselement (16) einen ersten Seitenabschnitt (54), der dem einen oder den mehreren zweiten Presselementen (32) zugewandt ist, und einen zweiten Seitenabschnitt (55) beinhaltet, der dem äußeren Bremsbelag (6) zugewandt ist, und
wobei der zweite Seitenabschnitt (55) eine Länge in der axialen Richtung aufweist, die weniger als eine Länge in der axialen Richtung des ersten Seitenabschnitts (54) ist.

8. Scheibenbremse nach Anspruch 7, wobei die Länge in der axialen Richtung des zweiten Seitenabschnitts (55) weniger als 1/3 der Länge in der axialen Richtung des ersten Seitenabschnitts (54) ist.

9. Scheibenbremse nach Anspruch 7 oder 8, wobei der zweite Seitenabschnitt (55) einen Querschnitt aufweist, der geformt ist, sodass ein Außenabschnitt des zweiten Seitenabschnitts (55) in der Breitenrichtung des Fahrzeugs größer in der radialen Richtung des Rads als ein Abschnitt des zweiten Seitenabschnitts (55) ist, der dem äußeren Bremsbelag (6) zugewandt ist.

## Revendications

1. Frein à disque de type flottant, comprenant :
un patin intérieur (4) et un patin extérieur (6) situés respectivement sur les côtés opposés d'un rotor (3) pouvant tourner avec une roue d'un véhicule,
un dispositif presseur (8) conçu pour presser le patin intérieur (4) et le patin extérieur (6) contre le rotor (3), et
un boîtier (10) monté sur un élément non rotatif et maintenant le dispositif presseur (8);
ledit dispositif presseur (8) comprenant :
un ou plusieurs premiers éléments presseurs (30) maintenus par le boîtier (10) et pouvant s'approcher du rotor (3) et un ou plusieurs deuxièmes éléments presseurs (32) maintenus par le boîtier (10) et pouvant s'éloigner du rotor (3), et
un élément d'entraînement (16) maintenu par le boîtier (10) de manière à être mobile par rapport au boîtier (10) dans un sens axial parallèle à un axe de rotation du rotor (3), l'élément d'entraînement (16) étant conçu pour être déplacé sous l'effet d'un mouvement du ou des deuxièmes éléments presseurs (32) afin de presser le patin extérieur (6) contre le rotor (3),
ledit boîtier (10) comprenant : une première portion de boîtier (18) disposée sur un côté intérieur du rotor (3) dans le sens de la largeur du véhicule et retenant le ou les premiers éléments presseurs (30) et le ou les deuxièmes éléments presseurs (32), et une deuxième portion de boîtier (19) s'étendant depuis la première portion de boîtier (18) jusqu'à un côté extérieur du rotor (3) dans le sens de la largeur du véhicule,
ladite deuxième portion de boîtier (19) comprenant une paire de tiges (80, 82) espacées l'une de l'autre dans le sens circonférentiel de la roue et s'étendant dans le sens axial, la paire de tiges (80, 82) comprenant respectivement des portions en vis-à-vis qui se font face dans le sens circonférentiel, chaque tige de la paire de tiges (80, 82) comprenant une portion de rail (90, 91) prévue au niveau de la portion en vis-à-vis en s'étendant dans le sens axial, les portions de rail (90, 91) de la paire de tiges (80, 82) constituant une paire de portions de rail (90, 91), et
ledit patin extérieur (6) étant maintenu par la paire de portions de rail (90, 91) de manière à pouvoir se déplacer dans le sens axial par rapport à la paire de portions de rail (90, 91), et la paire de portions de rail (90, 91) présentant respectivement des récepteurs de couple (90f, 91f) conçus pour recevoir un couple qui agit sur le patin extérieur (6).

2. Frein à disque selon la revendication 1,
dans lequel le patin extérieur (6) comprend une paire de protubérances (6a, 6b) prévues sur une portion circonférentielle extérieure du patin extérieur (6) en des positions espacées l'une de l'autre dans le sens circonférentiel, de manière à faire saillie vers l'extérieur dans un sens radial de la roue, et
dans lequel la paire de protubérances (6a, 6b) est respectivement en prise avec la paire de portions de rail (90, 91) pour permettre au patin extérieur (6) d'être maintenu par la paire de portions de rail (90, 91).

3. Frein à disque selon la revendication 1 ou 2,
dans lequel le patin intérieur (4) est maintenu par la paire de portions de rail (90, 91) de manière à pouvoir se déplacer dans le sens axial par rapport à la paire de portions de rail (90, 91),
dans lequel le frein à disque comprend un élément élastique (100) conçu pour pousser élastiquement le patin intérieur (4) et le patin extérieur (6) dans un sens radial de la roue et dans le sens circonférentiel, et
dans lequel l'élément élastique (100) est maintenu au niveau de la paire de portions de rail (90, 91).

4. Frein à disque selon l'une quelconque des revendications 1 à 3,
dans lequel l'élément d'entraînement (16) comprend une pluralité de goupilles (60, 62) s'étendant dans le sens axial et espacées les unes des autres dans le sens circonférentiel, l'élément d'entraînement (16) étant maintenu par le boîtier (10) grâce à la pluralité de goupilles (60, 62) de manière à pouvoir se déplacer dans le sens axial par rapport au boîtier (10), et
dans lequel l'axe central de chaque goupille de la pluralité de goupilles (60, 62), l'axe central de chacun des un ou plusieurs premiers éléments presseurs (30) et l'axe central de chacun des un ou plusieurs deuxièmes éléments presseurs (32) sont situés sur un même plan.

5. Frein à disque selon la revendication 4,
dans lequel l'élément d'entraînement (16) est de forme symétrique par rapport à un plan de symétrie qui s'étend dans un sens parallèle au sens axial, et
dans lequel ledit plan s'étend de manière à être orthogonal au plan de symétrie de l'élément d'entraînement (16).

6. Frein à disque selon la revendication 5,
dans lequel une paire de goupilles (60, 62) de la pluralité de goupilles (60, 62) est prévue en des positions de l'élément d'entraînement (16) qui sont symétriques par rapport au plan de symétrie, et
dans lequel une paire de trous de fixation de goupille (46, 48) est formée sur des portions du boîtier (10) qui sont espacées l'une de l'autre dans le sens circonférentiel, la paire de trous de fixation de goupille (46, 48) s'étendant dans le sens axial de manière à être parallèle.

7. Frein à disque selon l'une quelconque des revendications 1 à 6,
dans lequel l'élément d'entraînement (16) comprend une première portion latérale (54) faisant face auxdits un ou plusieurs deuxièmes éléments presseurs (32) et une deuxième portion latérale (55) faisant face au patin extérieur (6), et
dans lequel la deuxième portion latérale (55) a une longueur, dans le sens axial, qui est inférieure à la longueur, dans le sens axial, de la première portion latérale (54).

8. Frein à disque selon la revendication 7, dans lequel la longueur, dans le sens axial, de la deuxième portion latérale (55) est inférieure au tiers de la longueur, dans le sens axial, de la première portion latérale (54).

9. Frein à disque selon la revendication 7 ou 8, dans lequel la deuxième portion latérale (55) a une section transversale formée de sorte qu'une portion extérieure de la deuxième portion latérale (55), dans le sens de la largeur du véhicule, est plus grande dans un sens radial de la roue qu'une portion de la deuxième portion latérale (55) faisant face au patin extérieur (6).
